# EUROPÄISCHE PATENTSCHRIFT

(11) **EP 1 204 543 B1**
(45) Veröffentlichungstag und Bekanntmachung des Hinweises auf die Patenterteilung: **06.10.2004**
(21) Anmeldenummer: 00954376.0
(22) Anmeldetag: 28.07.2000
(51) Int. Cl.: B60R 16/02

(54) **VERFAHREN UND VORRICHTUNG ZUR ANZEIGE VON FAHRERINFORMATIONEN IN EINEM KRAFTFAHRZEUG**
METHOD AND DEVICE FOR DISPLAYING DRIVER INFORMATION IN A MOTOR VEHICLE
PROCEDE ET DISPOSITIF POUR L'AFFICHAGE D'INFORMATIONS AU CONDUCTEUR DANS UN VEHICULE A MOTEUR

(30) Priorität: 30.07.1999 DE 19935892
(43) Veröffentlichungstag der Anmeldung: 15.05.2002
(73) Patentinhaber: ROBERT BOSCH GMBH, 70442 Stuttgart (DE)
(72) Erfinder: GEISLER, Thomas, D-76137 Karlsruhe (DE)
(86) Internationale Anmeldenummer: PCT/DE2000/002477
(87) Internationale Veröffentlichungsnummer: WO 2001/008929

(56) Entgegenhaltungen:
- EP-A- 0 740 132
- EP-A- 1 233 250
- WO-A-00/31606
- DE-A- 4 340 048
- US-A- 5 757 290
- US-A- 5 870 559

## Beschreibung

### STAND DER TECHNIK

Die vorliegende Erfindung betrifft ein Verfahren und eine Vorrichtung zur Anzeige von Fahrerinformationen in einem Kraftfahrzeug, wobei von verschiedenen, miteinander über einen Bus vernetzten Einzelgeräten herrührende Fahrerinformationen auf einem gemeinsamen Fahrerinformationsdisplay mit einer graphischen Bedienoberfläche (GUI = Graphical User Interface) darstellbar sind.

Obwohl auf beliebige Kraftfahrzeuge anwendbar, werden die vorliegende Erfindung sowie die ihr zugrundeliegende Problematik in bezug auf eine an Bord eines Automobils befindliche Anzeigevorrichtung erläutert.

Dazu sei bemerkt, daß im folgenden der Begriff "Fahrerinformationsdisplay" allgemein verstanden werden soll, und zwar sowohl als Display in einem Kombiinstrument, als Display in der Mittelkonsole eines Fahrzeugs, als Display im Fond der Fahrzeuge, z.B. in den Kopfstützen von Fahrer- und Beifahrersitz, usw.

Früher wurden in Automobilen verschiedene Einzelgeräte mit eigenen grafischen Bedienoberflächen zur Anzeige von Fahrerinformationen eingesetzt, wie z.B. Radio, Telefon, Navigationshilfe, etc.. Dabei hat sich herausgestellt, daß es unkomfortabel ist, jedes Einzelgerät mit einer grafischen Bedienoberfläche zu versehen, da diese nur auf einem verhältnismäßig kleinen jeweiligen Fahrerinformationsdisplay des Einzelgeräts, beispielsweise einem Flüssigkristall-Display, abgebildet werden kann.

Infolge dieses Nachteils setzen die Kraftfahrzeughersteller heutzutage auf sogenannte gemeinsame Fahrerinformationsdisplays, welche zentral in der Mittelkonsole oder dem Kombiinstrument des Kraftfahrzeuges untergebracht sind und welche die von verschiedenen Einzelgeräten herrührenden Fahrerinformationen zentral anzeigen. Diese gemeinsamen Fahrerinformationsdisplays können ein größeres Format und somit eine bessere Auflösung als die Einzeldisplays der Einzelgeräte aufweisen. Außerdem bieten die gemeinsamen Fahrerinformationsdisplays die Möglichkeit zur Farbwiedergabe und zur Wiedergabe attraktiverer bzw. sinnfälligerer Symbole.

Es sind verschiedene Arten der Verbindung zwischen dem gemeinsamen Fahrerinformationsdisplay und den verschiedenen Einzelgeräten bekannt. Beispielsweise werden Kartendarstellungen von Navigationshilfen üblicherweise als Videosignal übertragen. Nachteilig daran ist, daß das gemeinsame Fahrer-Informationsdisplay einen zusätzlichen Video-Eingang benötigt und in der Regel eine schlechte Graphikqualität aufweist. Der Befehl zur Anzeige eines Wegleitsymbols von einer Navigationshilfe wird üblicherweise über einen Bus übertragen, z. B. den bekannten CAN-Bus, welcher die Navigationshilfe mit dem gemeinsamen Fahrerinformationsdisplay verbindet. Das Wegleitsymbol selbst jedoch ist im gemeinsamen Fahrerinformationsdisplay, welches sich beispielsweise im Kombiinstrument befindet, abgespeichert. Dies bringt den Nachteil, dass das gemeinsame Fahrerinformationsdisplay und das externe Einzelgerät, in diesem Fall die Navigationshilfe, aufeinander abgestimmt sein müssen.

Aus der EP 0 740 132 A2, die den nächstkommenden Stand der Technik bildet, ist ein Audio-Video Navigationssystem zur simultanen Anzeige mehrerer Informationen bekannt. Das System umfaßt eine Bildanzeigeeinheit mit einer grafischen Bedienoberfläche, die an eine Gerätehaupteinheit angeschlossen ist. Mit dieser sind über ein Bussystem unter anderem eine Audio-Video Empfängereinheit, ein CD-Wechsler und eine GPS- (Global Positioning System) Einheit verbunden, die jeweils eine Prozessoreinheit und einen eigenen Speicher aufweisen. Die Gerätehaupteinheit weist ferner eine CD-ROM Leseeinheit für Navigationsinformationen, eine Rechnereinheit, eine Grafikerzeugereinheit und eine Bildmischeinheit auf, die die Bildanzeigeeinheit ansteuert. Damit ist es möglich, beispielsweise eine elektronische Karte für die Navigation und gleichzeitig das von der Audio-Video Empfängereinheit erzeugte Bild ihres Bedienstatus auf der Bildanzeigeeinheit darzustellen.

Schließlich können heutzutage viele externe Einzelgeräte in Ermangelung eines geeigneten Kommunikationsstandards gar nicht mit einem gemeinsamen Fahrerinformationsdisplay kommunizieren und daher deren Fahrerinformationen nicht zentral dargestellt werden.

### VORTEILE DER ERFINDUNG

Das erfindungsgemäße Anzeigeverfahren mit den Merkmalen des Anspruchs 1 und die entsprechende Anzeigevorrichtung gemäss Anspruch 6 weisen gegenüber den bekannten Lösungsansätzen den Vorteil auf, dass ein Plug-and-Play-System im Kraftfahrzeug geschaffen ist.

Die der vorliegenden Erfindung zugrunde liegende Idee besteht darin, dass jedes Einzelgerät im Cockpit eines Kraftfahrzeuges, wie z. B. Radio, Telefon, Navigationshilfe, mit einem zur Grundausstattung des Kraftfahrzeugs gehörenden gemeinsamen Fahrerinformationsdisplay mittels eines bestimmten Datenübertragungsstandards über ein geeignetes Bus-System kommunizieren kann. Dazu enthält jedes Einzelgerät.alle von ihm benötigten grafischen Darstellungen, z.B. Verkehrsfunksymbol, Wegleit-symbol, Telefonnummern-Anzeige, usw. entsprechend der zu ihnen gehörenden Funktionen, welche im gemeinsamen Fahrer-Informationsdisplay dargestellt werden sollen.

Damit ist es möglich, daß die Art der Darstellung nicht durch das gemeinsame Fahrer-Informationsdisplay bestimmt wird, sondern durch die Einzelgeräte. Dies ist zweckmäßig, da die Einzelgeräte stets mit neuen grafischen Darstellungen entsprechend neuer Funktionen aufwarten, die nicht alle vom Hersteller des gemeinsamen Fahrer-Informationsdisplays vorhersehbar sind.

Dadurch, daß jedes Einzelgerät auch die ihr im Netzwerk-Kontext zugeordneten Grafiken der grafischen Bedienoberfläche enthält, ist das Einzelgerät ohne zusätzliche Maßnahmen an anderen Einzelgeräten im Netzwerk integrierbar. Der Entwicklungs- und Abstimmungsaufwand zwischen Kunden und Herstellern von Fremdgeräten werden somit drastisch reduziert.

Jeder Hersteller kann die Darstellung der grafischen Bedienoberfläche des von ihm gelieferten Einzelgeräts im Netzwerk-Kontext selbst bestimmen. Somit kann beispielsweise eine attraktive Darstellung eines Radios von einem Hersteller A nicht durch eine unattraktive Darstellung des gemeinsamen Fahrer-Informationsdisplays des Herstellers B in seinem Wert geschmälert werden. Dasselbe gilt in umgekehrter Richtung.

Nach alledem ermöglicht die vorliegende Erfindung die Darstellung eines neuen Industrie-Standards für solche über einen Bus miteinander vernetzte Einzelgeräte. Jeder Hersteller, der sich daran beteiligt, wird dies in der Werbung für seine Produkte offenlegen, da der Verbraucher schließlich den Vorteil der Kompatibilität genießt.

In den Unteransprüchen finden sich vorteilhafte Weiterbildungen und Verbesserungen des jeweiligen Gegenstandes der Erfindung.

Gemäß einer bevorzugten Weiterbildung werden die zugehörigen graphischen Darstellungen im jeweiligen Einzelgerät in einem Bitmapformat, vorzugsweise komprimiert, abgespeichert.

Gemäß einer weiteren bevorzugten Weiterbildung wird die übertragene jeweils benötigte graphischen Darstellung von dem Einzelgerät auf dem gemeinsamen Fahrerinformationsdisplay zusammen mit einer spezifischen Darstellung des gemeinsamen Fahrerinformationsdisplays, welche Funktionen des gemeinsamen Fahrerinformationsdisplays entspricht, dargestellt wird, wobei die spezifischen Darstellung im gemeinsamen Fahrerinformationsdisplay gespeichert wird.

Gemäß einer weiteren bevorzugten Weiterbildung wird die übertragene jeweils benötigte graphische Darstellung von dem Einzelgerät und die damit zusammen darzustellende spezifische Darstellung im gemeinsamen Fahrerinformationsdisplay aneinander angepaßt, insbesondere indem algorithmische Verknüpfungen zwischen entsprechenden Pixeln vorgenommen werden.

Gemäß der Erfindung werden in den Einzelgeräten Darstellungsattribute gespeichert, welche zusammen mit der jeweils benötigten graphischen Darstellung von dem Einzelgerät über den Bus an das gemeinsame Fahrerinformationsdisplay übertragen werden und welche vorzugsweise in den Einzelgeräten eingestellt werden können.

Gemäß einer weiteren bevorzugten Weiterbildung enthalten die Darstellungsattribute mindestens eines der folgenden Attribute : Angaben, wo die Darstellung auf dem gemeinsamen Fahrerinformationsdisplay zur erfolgen hat; Angaben, wie die Darstellung auf dem gemeinsamen Fahrerinformationsdisplay zur erfolgen hat, insbesondere über funktionale Farbe (zurückhaltende Schriftfarbe, Warnfarbe) und Palettenfarben usw.; Angaben zur Priorität der Darstellung auf dem gemeinsamen Fahrerinformationsdisplay im Verhältnis zu graphischen Darstellungen anderer Einzelgeräte; und indirekte Attribute, welche von dem Fahrerinformationsdisplay interpretierbar sind.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein Blockschaltbild einer Vorrichtung zur Anzeige von Fahrerinformationen in einem Kraftfahrzeug als Ausführungsbeispiel der vorliegenden Erfindung;
- Fig. 2: eine Illustration der Übertragung einer in der Navigationshilfe von Fig. 1 gespeicherten graphischen Darstellung über den Bus an das gemeinsame Fahrerinformationsdisplay und zwei Fälle A, B der Darstellung in einem Hintergrundbild;
- Fig. 3a,b: verschiedene Einblendungsvarianten der übertragenen graphischen Darstellung in das Hintergrundbild gemäß Fall B in Fig. 2; und
- Fig. 4a,b: verschiedene Varianten einer graphischen Darstellung bzgl. der in der Bitmap gespeicherten Bilddetails.

### BESCHREIBUNG DER AUSFÜHRUNGSBEISPIELE

In den Figuren bezeichnen gleiche Bezugszeichen gleiche oder funktionsgleiche Komponenten.

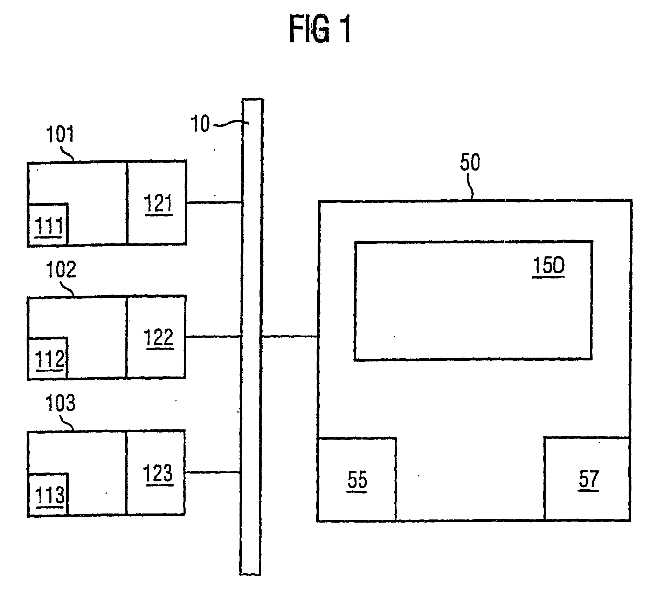

Fig. 1 zeigt ein Blockschaltbild einer Vorrichtung zur Anzeige von Fahrerinformationen in einem Kraftfahrzeug als Ausführungsbeispiel der vorliegenden Erfindung.

Das in Figur 1 dargestellte System enthält drei Einzelgeräte, ein Radio 101, ein Telefon 102 und eine Navigationshilfe 103. In jedem Einzelgerät 101, 102, 103 ist ein zugehöriger Speicher 111, 112, 113 vorgesehen, in dem die zugehörigen graphischen Darstellungen des betreffenden Einzelgerätes 101, 102, 103 abgespeichert sind.

Beim vorliegenden Beispiel sind diese graphischen Darstellungen in einem Bitmap-Format abgespeichert. Die Abspeicherung im Bitmap-Format hat den Vorteil, daß das Bildmaterial im voraus, also offline, erzeugbar ist, denn die online-Erzeugung des Bildmaterials kann unter Umständen sehr aufwendig sein, z.B. wegen der Durchführung von einem Antialiasing-Verfahren o.ä..

Die im jeweiligen Einzelgerät vorgesehene Übermittlungseinrichtung 121, 122, 123 überträgt gemäß einem vorbestimmten Bus-Kommunikationsschema (z.B. CAN-Busschema) eine jeweils benötigte graphische Darstellung von dem Einzelgerät 101, 102, 103 über den Bus 10 an das gemeinsame Fahrerinformationsdisplay. Im Fahrerinformationsdisplay 50 wird eine solche Darstellung durch die dort vorgesehene Darstellungseinrichtung 57, z.B. einen üblichen Graphik-Controller, dargestellt.

In den Speichern 111, 112, 113 der Einzelgeräte 101, 102, 103 sind zusammen mit den graphischen Darstellungen ebenfalls Darstellungsattribute gespeichert. Solche Attribute sind Angaben, in welchem Bereich die graphische Darstellung des Einzelgeräts auf der graphischen Benutzeroberfläche 150 des gemeinsamen Fahrer-Informationsdisplays 50 erfolgen soll. Dies kann insbesondere durch die Angabe von Koordinaten oder Bereichen geschehen, z.B. im dominanten Haupt-Anzeigebereich, in der Statusleiste oder in der Menüleiste. Des weiteren enthalten die Darstellungsattribute Angaben über die Farben der graphischen Darstellungen, welche entweder als absolute Werte (RGB-System, Palettenfarben oder sonstige feste Bezeichnung) oder als Funktionsfarbe angegeben werden können. Beispiele für Funktionsfarben wären: Hintergrundfarbe, zurückhaltende Schriftfarbe, dominante Schriftfarbe, Warnfarbe, Schmuckfarbe, usw.. Dadurch können die graphischen Darstellungen der Einzelgeräte in gestalterisch sinnvoller Weise aneinander angepaßt werden.

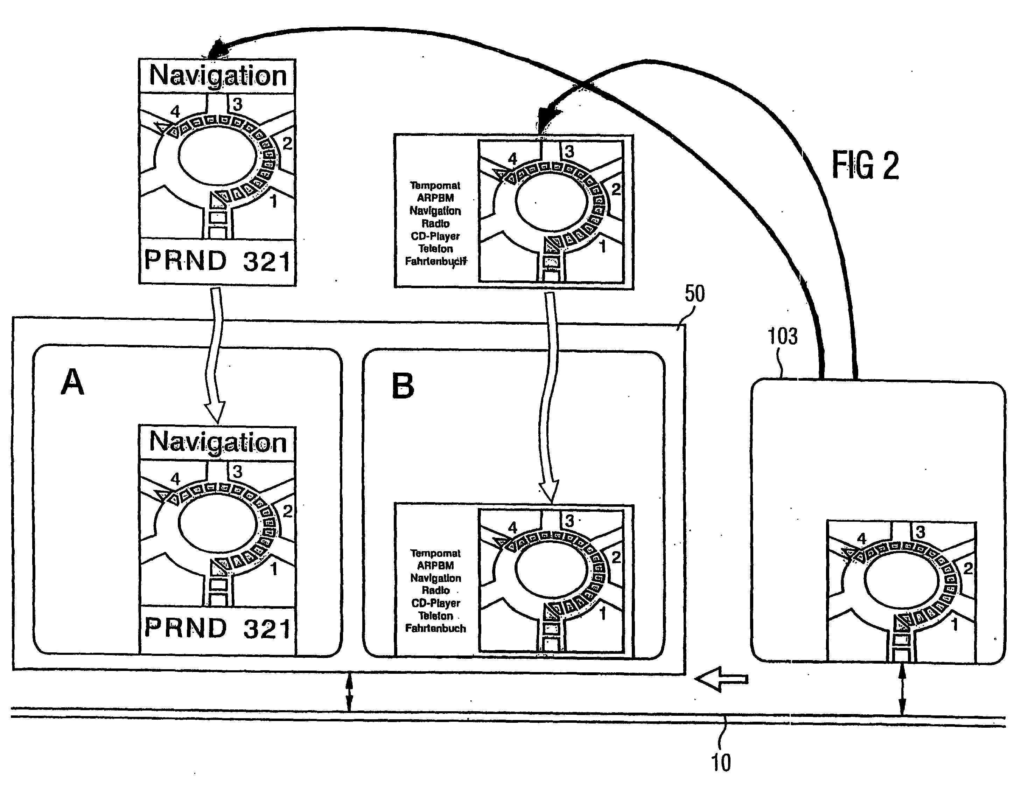

Fig. 2 zeigt eine Illustration der Übertragung einer in der Navigationshilfe 103 von Fig. 1 gespeicherten graphischen Darstellung über den Bus 10 an das gemeinsame Fahrerinformationsdisplay 50 und zwei Fälle A, B der Darstellung in einem Hintergrundbild.

Die Navigationshilfe 103 überträgt nach einem geeigneten Dialog die in ihrem Speicher 113 gespeicherte Teilgraphik, welche in Fig. 2 rechts unten dargestellt ist, an das gemeinsame Fahrerinformationsdisplay 50 über den Bus 10.

Im Speicher 55 des gemeinsamen Fahrerinformationsdisplays 50 sind die mit A und B bezeichneten Hintergrundgraphiken gespeichert, von denen alternativ eine zur Darstellung auswählbar ist, z.B. durch eine entsprechende Fahrereingabe.

Diese mit A und B bezeichneten Hintergrundgraphiken haben ein entsprechendes Feld, in das die übertragene Teilgraphik der Navigationshilfe 103 einblendbar ist, wie in Fig. 2 durch Pfeile angedeutet.

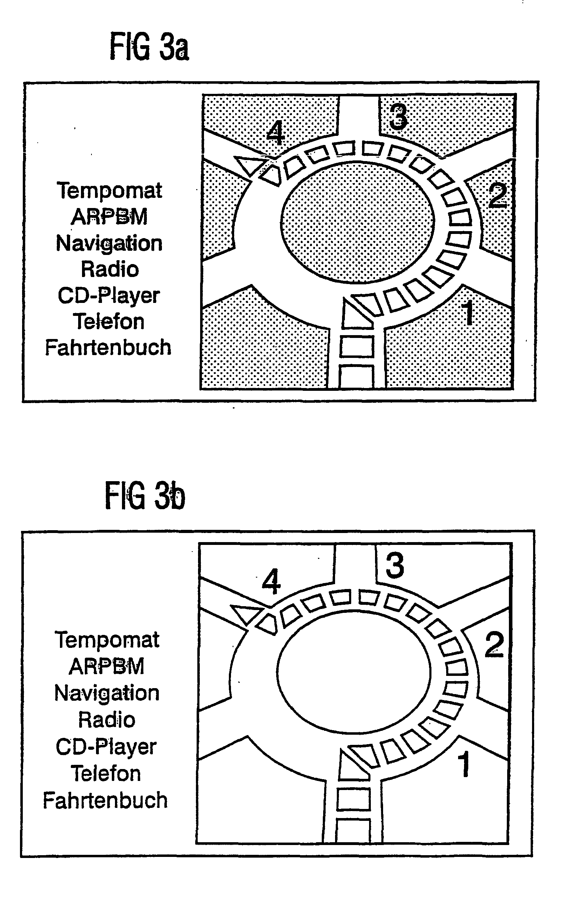

Fig. 3a,b zeigen verschiedene Einblendungsvarianten der übertragenen graphischen Darstellung in das Hintergrundbild gemäß Fall B in Fig. 2.

Teilgraphiken können auch durch bestimmte Anpassungsverfahren bzw. Zusammensetzungs- oder Compositing-Methoden an spezielle Hintergrundbilder und/oder Rahmengraphiken des gemeinsamen Fahrerinformationsdisplays 50 angepaßt werden. Als solches Anpassungsverfahren sind die verschiedensten linearen und nicht linearen Verknüpfungen zwischen je einem einzublendenden Pixel (Bildpunkt) der darzustellenden graphischen Darstellung des jeweiligen Einzelgeräts und des entsprechenden Pixels der speziellen Hintergrundgraphik denkbar.

Gemäß Figur 3a,b wird dies durch folgende Vorschrift realisiert, welche als Max-Compositing bezeichnet wird.

Die graphische Darstellung im Bild 2, rechts unten, als Teilgraphik, im folgenden Source genannt, wird in den Hintergrund der graphischen Benutzeroberfläche 150 des Fahrerinformationsdisplays 50, Figur 2 - Fall B, im folgenden Destination genannt, folgendermaßen eingeblendet. Für den Rot-Anteil eines Pixels wird der Source-Wert genommen, wenn dieser größer ist als der Rot-Anteil des entsprechenden darunter liegenden Destinations-Pixels. Ist der Rot-Anteil des Destinations-Pixels dagegen größer, so wird dieser dargestellt. Dasselbe Verfahren wird für den Grün- und BlauAnteil der Pixel angewendet. Dies ergibt die in Fig. 3b gezeigte schöne gleichmäßige Darstellung ohne harte Übergänge.

Die in Fig. 3a gezeigte Darstellung hingegen ist eine reine Überlagerung, was in harten unansehnlichen Konturen resultiert.

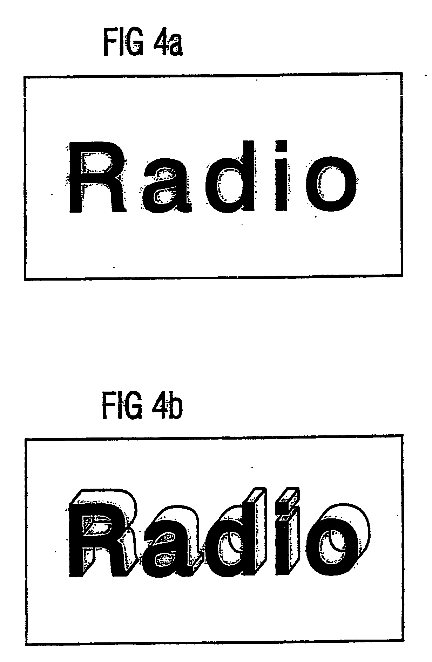

Fig. 4a,b zeigen verschiedene Varianten einer graphischen Darstellung bzgl. der in der Bitmap gespeicherten Bilddetails.

Die als Bitmap abgespeicherten graphischen Darstellungen sind zweckmäßigerweise im Einzelgerät komprimiert abspeicherbar und ebenso von dort an das gemeinsame Fahrerinformationsdisplay übertragbar. Dies hat den Vorteil, daß wenig Speicherplatz benötigt wird, wenn einfache Bildinhalte mit wenigen Details gewählt werden, wie mit Bezug auf Figur 4a,b erläutert.

Insbesondere zeigt Figur 4a eine Bitmap der Darstellung "RADIO" mit wenigen Details, wobei eine sehr hohe Kompression möglich ist, hier auf 6%. Komprimiert als GIF-Bild ergeben sich 280 Byte. Figur 4b zeigt eine Bitmap der Darstellung "RADIO" mit feineren dreidimensional wirkenden Details, wobei eine hohe Kompression immer noch möglich ist, hier auf 35%. Komprimiert als GIF-Bild ergeben sich 1,7 kByte.

Unkomprimiert weisen beide Bilder 100 x 50 Pixel x 256 Farben auf, was in 4,9 kByte im unkomprimierten Zustand resultiert.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere sind zusammen mit den graphischen Darstellungen beliebige Darstellungsattribute übertragbar, wie z.B. Angaben, wo die Darstellung auf dem gemeinsamen Fahrerinformationsdisplay zur erfolgen hat; Angaben, wie die Darstellung auf dem gemeinsamen Fahrerinformationsdisplay zur erfolgen hat, insbesondere über funktionale Farbe (zurückhaltende Schriftfarbe, Warnfarbe) und Palettenfarben usw.; Angaben zur Priorität der Darstellung auf dem gemeinsamen Fahrerinformationsdisplay im Verhältnis zu graphischen Darstellungen anderer Einzelgeräte; und indirekte Attribute, welche von dem Fahrerinformationsdisplay interpretierbar sind.

## Patentansprüche

1. Verfahren zur Anzeige von Fahrerinformationen in einem Kraftfahrzeug, wobei von verschiedenen, miteinander über einen Bus (10) vernetzten Einzelgeräten (101, 102, 103) herrührende Fahrerinformationen auf einem gemeinsamen Fahrerinformationsdisplay (50) mit einer grafischen Bedienoberfläche (150), dargestellt werden wobei die zugehörigen grafischen Darstellungen und Darstellungsattribute im jeweiligen Einzelgerät (101, 102, 103) in einem dem jeweiligen Einzelgerät zugehörigen Speicher (111, 112, 113) gespeichert werden, wobei die Darstellungsattribute zusammen mit der jeweils benötigten grafischen Darstellung von dem Einzelgerät (101, 102, 103) über den Bus (10) an das gemeinsame Fahrerinformationsdisplay (50) übertragen werden, wobei die Darstellungsattribute in den Einzelgeräten (101, 102, 103) eingestellt werden und wobei die übertragene jeweils benötigte grafischen Darstellung von dem Einzelgerät (101, 102, 103) auf der grafischen Bedienoberfläche (150) des gemeinsamen Fahrerinformationsdisplays (50) dargestellt wird.

2. Verfahren nach Anspruch 1, **dadurch gekennzeichnet, dass** die zugehörigen grafischen Darstellungen im jeweiligen Einzelgerät (101, 102, 103) in einem Bitmapformat, vorzugsweise komprimiert, abgespeichert werden. :

3. Verfahren nach Anspruch 1 oder 2, **dadurch gekennzeichnet, dass** die übertragene jeweils benötigte grafische Darstellung von dem Einzelgerät (101, 102, 103) auf dem gemeinsamen Fahrerinformationsdisplay (50) zusammen mit einer spezifischen Darstellung des gemeinsamen Fahrerinformationsdisplays, welche Funktionen des gemeinsamen Fahrerinformationsdisplays entspricht, dargestellt wird, wobei die spezifische Darstellung in einem Speicher (55) des gemeinsamen Fahrerinformationsdisplays (50) gespeichert wird.

4. Verfahren nach Anspruch 3, **dadurch gekennzeichnet, dass** die übertragene jeweils benötigte grafische Darstellung von dem Einzelgerät (101, 102, 103) und die damit zusammen darzustellende spezifische Darstellung im gemeinsamen Fahrerinformationsdisplay (50) aneinander angepasst werden, indem algorithmische Verknüpfungen zwischen entsprechenden Pixeln vorgenommen werden.

5. Verfahren nach einem der vorherigen Ansprüche, **dadurch gekennzeichnet, dass** die Darstellungsattribute mindestens eines der folgenden Attribute enthalten:
Angaben, wo die Darstellung auf dem gemeinsamen Fahrerinformationsdisplay (50) zu erfolgen hat;
Angaben, wie die Darstellung auf dem gemeinsamen Fahrerinformationsdisplay (50) zu erfolgen hat, insbesondere über funktionale Farbe und Palettenfarben usw.;
Angaben zur Priorität der Darstellung auf dem gemeinsamen Fahrerinformationsdisplay (50) im Verhältnis zu grafischen Darstellungen anderer Einzelgeräte; und
Indirekte Attribute, welche von dem Fahrerinformationsdisplay (50) interpretierbar sind.

6. Vorrichtung zur Anzeige von Fahrerinformationen in einem Kraftfahrzeug, zur Darstellung von verschiedenen, miteinander über den Bus (10) vernetzten Einzelgeräten (101, 102, 103) herrührende Fahrerinformationen auf einem gemeinsamen Fahrerinformationsdisplay (50) mit einer grafischen Bedienoberfläche (150), mit:
einem jeweils in dem betreffenden Einzelgerät (101, 102, 103) vorgesehenen Speicher (111, 112, 113) zum Abspeichern der zugehörigen grafischen Darstellung im Einzelgerät (101, 102, 103) und zum Abspeichern von Darstellungsattributen, welche zusammen mit der jeweils benötigten grafischen Darstellung durch die Übertragungseinrichtung (121, 122, 123) von dem Einzelgerät (101, 102, 103) über den Bus (10) an das gemeinsame Fahrerinformationsdisplay (50) übertragbar sind,
einer jeweiligen dem betreffenden Einzelgerät (101, 102, 103) vorgesehenen Übertragungseinrichtung (121, 122, 123) zum Übertragen einer jeweils benötigten grafischen Darstellung und der Darstellungsattribute von dem Einzelgerät (101, 102, 103) über den Bus (10) an das gemeinsame Fahrerinformationsdisplay (50); und
einer in dem gemeinsamen Fahrerinformationsdisplay (50) vorgesehenen Darstellungseinrichtung (57) zum Darstellen der übertragenen jeweils benötigten grafischen Darstellung von dem Einzelgerät (101, 102, 103) auf der grafischen Bedienoberfläche (150) des gemeinsamen Fahrerinformationsdisplays (50).

7. Vorrichtung nach Anspruch 6, **dadurch gekennzeichnet, dass** die zugehörigen grafischen Darstellungen im Speicher (111, 112, 113) des jeweiligen Einzelgerätes (101, 102, 103) in einem Bitmapformat, vorzugsweise komprimiert, abgespeichert sind.

8. Vorrichtung nach Anspruch 6 oder 7, **dadurch gekennzeichnet, dass** das gemeinsame Fahrerinformationsdisplay (50) einen Speicher (55) zum Speichern von spezifischen Darstellungen des gemeinsamen Fahrerinformationsdisplays (50) aufweist, welche Funktionen des gemeinsamen Fahrerinformationsdisplays (50) entsprechen, und die Darstellungseinrichtung (57) derart gestaltet ist, dass die übertragene jeweils benötigte grafische Darstellung von dem Einzelgerät (101, 102, 103) auf dem gemeinsamen Fahrerinformationsdisplay (50) zusammen mit den spezifischen Darstellungen des gemeinsamen Fahrerinformationsdisplays (50) erfolgt.

9. Vorrichtung nach Anspruch 8, **dadurch gekennzeichnet, dass** die Darstellungseinrichtung (57) eine Anpassungseinrichtung zum Anpassen der übertragenen jeweils benötigten grafischen Darstellung von dem Einzelgerät (101, 102, 103) an die damit zusammen darzustellende spezifische Darstellung im gemeinsamen Fahrerinformationsdisplay (50) durch Vornahme algorithmischer Verknüpfungen zwischen entsprechenden Pixeln aufweist.

10. Vorrichtung nach einem der Ansprüche 6-9, **dadurch gekennzeichnet, dass** die Darstellungsattribute mindestens eines der folgenden Attribute enthalten:
Angaben, wo die Darstellung auf dem gemeinsamen Fahrerinformationsdisplay (50) zu erfolgen hat;
Angaben, wie die Darstellung auf dem gemeinsamen Fahrerinformationsdisplay (50) zu erfolgen hat, insbesondere über funktionale Farbe und Palettenfarben usw.;
Angaben zur Priorität der Darstellung auf dem gemeinsamen Fahrerinformationsdisplay (50) im Verhältnis zu grafischen Darstellungen anderer Einzelgeräte; und
indirekte Attribute, welche von dem Fahrerinformationsdisplay (50) interpretierbar sind.

## Claims

1. Method for displaying driver information in a motor vehicle, where driver information coming from various single units (101, 102, 103) networked to one another by means of a bus (10) is displayed on a common driver information display (50) with a graphical user interface (150). where the associated graphical representations and representational attributes in the respective single unit (101, 102, 103) are stored in a memory (111, 112, 113) which is associated with the respective single unit, where the representational attributes together with the respectively required graphical representation from the single unit (101, 102, 103) are transmitted to the common driver information display (50) via the bus (10), where the representational attributes are set in the single units (101, 102, 103), and where the transmitted respectively required graphical representation from the single unit (101, 102, 103) is displayed on the graphical user interface (150) on the common driver information display (50).

2. Method according to Claim 1, **characterized in that** the associated graphical representations in the respective single unit (101, 102, 103) are stored in a bitmap format, preferably in compressed form.

3. Method according to Claim 1 or 2, **characterized in that** the transmitted respectively required graphical representation from the single unit (101, 102, 103) is displayed on the common driver information display (50) together with a specific representation of the common driver information display which corresponds to functions of the common driver information display, the specific representation being stored in a memory (55) in the common driver information display (50).

4. Method according to Claim 3, **characterized in that** the transmitted respectively required graphical representation from the single unit (101, 102, 103) and the specific representation which is to be displayed together therewith are aligned with one another in the common driver information display (50) by algorithmically linking appropriate pixels.

5. Method according to one of the preceding claims, **characterized in that** the representational attributes contain at least one of the following attributes:
statements indicating where the representation is required on the common driver information display (50);
statements indicating how the representation is required on the common driver information display (50), particularly regarding functional colour and palette colours etc.;
statements relating to the priority of the representation on the common driver information display (50) in relation to graphical representations from other single units; and
indirect attributes which can be interpreted by the driver information display (50).

6. Apparatus for displaying driver information in a motor vehicle in order to display driver information coming from various single units (101, 102, 103) networked to one another by means of the bus (10) on a common driver information display (50) with a graphical user interface (150), having:
a respective memory (111, 112, 113) provided in the single unit (101, 102, 103) in question for storing the associated graphical representation in the single unit (101, 102, 103) and for storing representational attributes which can be transmitted, together with the respectively required graphical representation, from the single unit (101, 102, 103) to the common driver information display (50) via the bus (10) by the transmission device (121, 122, 123),
a respective transmission device (121, 122, 123) provided in the single unit (101, 102, 103) in question for transmitting a respectively required graphical representation and the representational attributes from the single unit (101, 102, 103) to the common driver information display (50) via the bus (10); and
a display device (57) provided in the common driver information display (50) for displaying the transmitted respectively required graphical representation from the single unit (101, 102, 103) on the graphical user interface (150) on the common driver information display (50).

7. Apparatus according to Claim 6, **characterized in that** the associated graphical representations in the memory (111, 112, 113) in the respective single unit (101, 102, 103) are stored in a bitmap format, preferably in compressed form.

8. Apparatus according to Claim 6 or 7, **characterized in that** the common driver information display (50) has a memory (55) for storing specific representations of the common driver information display (50) which correspond to functions of the common driver information display (50), and the display device (57) is in a form such that the transmitted respectively required graphical representation from the single unit (101, 102, 103) is produced on the common driver information display (50) together with the specific representations of the common driver information display (50).

9. Apparatus according to Claim 8, **characterized in that** the display device (57) has an alignment device for aligning the transmitted respectively required graphical representation from the single unit (101, 102, 103) with the specific representation which is to be displayed together therewith in the common driver information display (50) by algorithmically linking appropriate pixels.

10. Method according to one of Claims 6-9, **characterized in that** the representational attributes contain at least one of the following attributes:
statements indicating where the representation is required on the common driver information display (50);
statements indicating how the representation is required on the common driver information display (50), particularly regarding functional colour and palette colours etc.;
statements relating to the priority of the representation on the common driver information display (50) in relation to graphical representations from other single units; and
indirect attributes which can be interpreted by the driver information display (50).

## Revendications

1. Procédé d'affichage d'informations de conduite dans un véhicule automobile selon lequel des informations de conduite venant de différents appareils séparés (101, 102, 103) réunis en réseau par un bus (10) sont affichées sur un afficheur commun d'informations de conduite (50) avec une surface d'utilisation graphique (150),
les représentations graphiques correspondantes et les attributions de représentation étant mémorisées dans une mémoire (111, 112, 113) associée à chaque appareil séparé (101, 102, 103),
les attributs de représentation et la représentation graphique nécessaire pour chaque appareil séparé (101, 102, 103) étant transmis par le bus (10) à l'afficheur d'informations de conduite (50), commun,
les attributs de représentation étant réglés dans les différents appareils séparés (101, 102, 103) et
la représentation graphique transmise, chaque fois nécessaire pour les différents appareils (101, 102, 103) étant représentée sur la surface d'utilisation graphique (150) de l'afficheur d'informations de conduite (50), commun.

2. Procédé selon la revendication 1,
**caractérisé en ce que**
les représentations graphiques correspondantes sont enregistrées dans chaque appareil séparé (101, 102, 103) suivant le format Bitmap de préférence avec compression.

3. Procédé selon la revendication 1 ou 2,
**caractérisé en ce que**
on affiche la représentation graphique transmise, nécessaire à chaque appareil séparé (101, 102, 103) ainsi qu'une représentation spécifique de l'afficheur commun d'informations de conduite qui correspond aux fonctions de l'afficheur commun d'informations de conduite, et on enregistre la représentation spécifique dans une mémoire (55) de l'afficheur commun d'informations de conduite (50).

4. Procédé selon la revendication 3,
**caractérisé en ce que**
la représentation graphique transmise, nécessaire à chaque appareil séparé (101, 102, 103) et la représentation spécifique commune à présenter sont adaptées l'une à l'autre dans l'afficheur commun d'informations de conduite (50) par des combinaisons algorithmiques entre les différents pixels.

5. Procédé selon l'une des revendications précédentes,
**caractérisé en ce que**
les attributs de représentation contiennent au moins l'un des attributs suivants :
des indications de l'endroit où doit se faire la représentation sur l'afficheur commun d'informations de conduite (50),
des indications où doit se faire la représentation sur l'afficheur commun d'informations de conduite (50) notamment les couleurs fonctionnelles et la palette des teintes, etc,
des indications de priorité de représentation sur l'afficheur commun d'informations de conduite (50) par rapport aux représentations graphiques d'autres appareils séparés, et
des attributs indirects qui peuvent être interprétés par l'afficheur d'informations de conduite (50).

6. Dispositif d'affichage d'informations de conduite dans un véhicule automobile pour représenter des informations de conduite venant de différents appareils séparés (101, 102, 103) réunis en réseau par un bus (10) sur un afficheur commun d'informations de conduite (50) avec une surface d'utilisation graphique (150) comprenant :
- une mémoire (111, 112, 113) respective dans chaque appareil séparé (101, 102, 103) pour enregistrer la représentation graphique correspondante dans l'appareil séparé (101, 102, 103) et pour enregistrer les attributs de représentation transmis avec la représentation graphique chaque fois nécessaire par l'installation de transmission (121, 122, 123) de l'appareil séparé (101, 102, 103) par le bus (10) vers l'afficheur commun d'informations de conduite (50),
- une installation de transmission (121, 122, 123) respective prévue dans l'appareil séparé (101, 102, 103) correspondant pour transmettre une représentation graphique chaque fois nécessaire et les attributs de représentation pour l'appareil séparé (101, 102, 103) par le bus (10) vers l'afficheur commun d'informations de conduite (50), et
- une installation de représentation (57) prévue dans l'afficheur commun d'informations de conduite (50) pour afficher la représentation graphique transmise, chaque fois nécessaire à l'appareil séparé (101, 102, 103) sur la surface d'utilisation graphique (150) de l'afficheur commun d'informations de conduite (50).

7. Dispositif selon la revendication 6,
**caractérisé en ce que**
les représentations graphiques correspondantes sont enregistrées dans la mémoire (111, 112, 113) de l'appareil séparé respectif (101, 102, 103) de préférence par compression dans le format Bitmap.

8. Dispositif selon la revendication 6 ou 7,
**caractérisé en ce que**
l'afficheur commun d'informations de conduite (50) comporte une mémoire (55) pour enregistrer les représentations spécifiques de l'afficheur commun d'informations de conduite (50), représentations qui correspondent aux fonctions de l'afficheur commun d'informations de conduite (50) et l'installation de représentation (57) est conçue de façon que la représentation graphique chaque fois nécessaire, transmise par chaque appareil séparé (101, 102, 103) se fasse sur l'afficheur commun d'informations de conduite (50) avec des représentations spécifiques de l'afficheur commun d'informations de conduite (50).

9. Dispositif selon la revendication 8,
**caractérisé en ce que**
l'installation de représentation (57) comporte une installation d'adaptation pour adapter la représentation graphique transmise, chaque fois nécessaire aux appareils séparés (101, 102, 103) avec la représentation spécifique correspondante à représenter dans l'afficheur commun d'informations de conduite (50) pour effectuer les combinaisons algorithmiques entre les pixels correspondants.

10. Dispositif selon l'une des revendications 6-9,
**caractérisé en ce que**
les attributs de représentation contiennent au moins l'un des attributs suivants :
- des indications correspondant à l'endroit de la représentation sur l'afficheur commun d'informations de conduite (50),
- des indications de la représentation sur l'afficheur commun d'informations de conduite (50) notamment concernant les couleurs fonctionnelles et la palette des couleurs, etc..
- des indications pour la priorité de la représentation sur l'afficheur commun d'informations de conduite (50) par rapport aux représentations graphiques d'autres appareils séparés, et
- des attributs indirects qui doivent être interprétés par l'afficheur d'informations de conduite (50).
